(19) Europäisches Patentamt / European Patent Office / Office européen des brevets

(11) **EP 4 617 937 A1**

(12) **EUROPÄISCHE PATENTANMELDUNG**

(43) Veröffentlichungstag:
**17.09.2025  Patentblatt 2025/38**

(21) Anmeldenummer: **24163408.8**

(22) Anmeldetag: **14.03.2024**

(51) Internationale Patentklassifikation (IPC):
**G06F 30/20** (2020.01)      **G06F 30/27** (2020.01)
**G06F 111/10** (2020.01)

(52) Gemeinsame Patentklassifikation (CPC):
**G06F 30/20; G06F 30/27;** G06F 2111/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Von Keler, Johannes**
  **72074 Tuebingen (DE)**
• **Rhode, Stephan**
  **76135 Karlsruhe (DE)**
• **Henkelmann, Nicola**
  **71665 Vaihingen/Enz (DE)**

(54) **COMPUTERIMPLEMENTIERTES VERFAHREN ZUM BESTIMMEN EINER VALIDIERUNGSMETRIK**

(57) Ein allgemeiner Aspekt der vorliegenden Offenbarung betrifft ein computerimplementiertes Verfahren zum Bestimmen einer Validierungsmetrik für die Bestimmung einer Modellgüte. Das Verfahren umfasst Empfangen einer ersten Datenreihe, die Ergebnisse einer Simulation umfasst, Empfangen einer zweiten Datenreihe, die Ergebnisse einer Messung umfasst, Empfangen einer Augenscheinvalidierung der ersten Datenreihe auf Basis eines Vergleichs zur zweiten Datenreihe, um eine Beurteilung der ersten Datenreihe zu erhalten, Anwenden einer Mehrzahl vorgegebener Metriken auf die erste Datenreihe und die zweite Datenreihe und Auswählen einer oder mehrerer Metriken aus der Mehrzahl von Metriken auf der Grundlage einer Vorgabebedingung, und Bestimmen einer Validierungsmetrik auf Basis einer Optimierung von Parametern unter Verwendung der ausgewählten einen oder mehreren Metriken und der Beurteilung der ersten Datenreihe.

## Fig. 4

## Beschreibung

Die vorliegende Erfindung betrifft ein Verfahren zum Bestimmen einer Validierungsmetrik für die Bestimmung einer Modellgüte. Die vorliegende Erfindung betrifft darüber hinaus ein entsprechendes Computersystem, ein entsprechendes Computerprogramm sowie ein entsprechendes computerlesbares Medium oder Signal.

## Stand der Technik

Hochautomatisierte oder autonome Systeme stehen bspw. in der Robotik und der Automobilbranche zunehmend im Fokus.

Simulationen und Modelle spielen eine entscheidende Rolle in der Entwicklung von Technologien wie dem autonomen Fahren. Sie ermöglichen Daten zu sammeln, ohne zwingend auf physische Testaufbauten angewiesen zu sein. Durch hochentwickelte Simulationssoftware können komplexe Szenarien in einer virtuellen Umgebung nachgebildet werden, was eine Vielzahl von Testfällen abdeckt, die in der realen Welt möglicherweise schwer zu reproduzieren sind. Virtuelle Tests bieten Ingenieuren die Möglichkeit, verschiedene Algorithmen, Sensorkonfigurationen und Fahrszenarien effizient zu evaluieren und zu optimieren, ohne dass teure und zeitaufwändige physische Tests durchgeführt werden müssen. Auf diese Weise beschleunigen Simulationen und Modelle den Entwicklungsprozess und tragen zur Sicherheit und Zuverlässigkeit autonomer Fahrzeuge bei.

Als Gütekriterium für Modelle, Mess- und Testverfahren wird neben der Reliabilität und Objektivität insbesondere die Validität herangezogen. Im Zusammenhang mit Modellen zur Simulation technischer Prozesse bildet die Validierung hierbei einen Teilprozess innerhalb der Modellbildung. Gegenstand dieser Validierung ist die Beantwortung der im Rahmen der Qualitätssicherung zentralen Frage, ob eine Simulation für ihren Anwendungszweck geeignet ist. Erst durch den Validierungsprozess wird der notwendige Qualitätsnachweis erbracht, dass die Simulationsergebnisse die Realität widerspiegeln bzw. für den Anwendungszweck geeignet sind und für weitere Produktentwicklungsstufen herangezogen werden können.

Die sogenannte operative Validierung dient in diesem Kontext der Qualitätsbewertung des ausführbaren Simulationsmodells und hat beispielsweise in der Fahrzeugtechnik höchste Praxisrelevanz, weil sie unmittelbar das Verhalten des virtuellen Fahrzeugs mit dem des realen Fahrzeugs vergleicht. Für ihre Durchführung ist es nicht notwendig, das konzeptionelle Modell, das der Simulation zugrunde liegt und sehr komplex sein kann, zu kennen. Da die operative Validierung auf einem experimentellen Vergleich von Simulations- und Messdaten basiert, ist sie auf unterschiedlichste Simulationsmodelle und -Werkzeuge anwendbar.

## Offenbarung der Erfindung

Ein erster allgemeiner Aspekt der vorliegenden Offenbarung betrifft ein computerimplementiertes Verfahren. Das Verfahren umfasst Empfangen einer ersten Datenreihe, die Ergebnisse einer Simulation umfasst, Empfangen einer zweiten Datenreihe, die Ergebnisse einer Messung umfasst, Empfangen einer Augenscheinvalidierung der ersten Datenreihe auf Basis eines Vergleichs zur zweiten Datenreihe, um eine Beurteilung der ersten Datenreihe zu erhalten, Anwenden einer Mehrzahl vorgegebener Metriken auf die erste Datenreihe und die zweite Datenreihe und Auswählen einer oder mehrerer Metriken aus der Mehrzahl von Metriken auf der Grundlage einer Vorgabebedingung, und Bestimmen einer Validierungsmetrik auf Basis einer Optimierung von Parametern unter Verwendung der ausgewählten einen oder mehreren Metriken und der Beurteilung der ersten Datenreihe.

Ein zweiter allgemeiner Aspekt der vorliegenden Offenbarung betrifft ein Computersystem, das dafür ausgelegt ist, das computerimplementierte Verfahren zum Bestimmen einer Validierungsmetrik für die Bestimmung einer Modellgüte gemäß dem ersten allgemeinen Aspekt (oder einer Ausführungsform davon) auszuführen.

Ein dritter allgemeiner Aspekt der vorliegenden Offenbarung betrifft ein Computerprogramm, das dafür ausgelegt ist, das computerimplementierte Verfahren zum Bestimmen einer Validierungsmetrik für die Bestimmung einer Modellgüte gemäß dem ersten allgemeinen Aspekt (oder einer Ausführungsform davon) auszuführen.

Ein vierter allgemeiner Aspekt der vorliegenden Offenbarung betrifft ein computerlesbares Medium oder Signal, das das Computerprogramm gemäß dem dritten allgemeinen Aspekt (oder einer Ausführungsführungsform davon) speichert und/oder enthält.

Das in dieser Offenbarung vorgeschlagene Verfahren nach dem ersten allgemeinen Aspekt (oder einer Ausführungsform davon) kann dazu dienen, ein computerimplementiertes Verfahren zum Bestimmen einer Validierungsmetrik für die Bestimmung einer Modellgüte bereitzustellen. Das Verfahren kann dazu dienen, eine objektive Validierungsmetrik bereitzustellen, um eine (vergleichbare) Güte eines (Simulations-)Modells zu bestimmen. In Beispielen kann die Validierungsmetrik in einer Datenbank abgespeichert werden und dazu dienen, zukünftige Simulationen zu validieren. In Beispielen kann die Validierungsmetrik mittels einer Web-App bereitgestellt werden und kann so skaliert werden. Das offenbarte Verfahren kann ermöglichen, die Notwendigkeit physischer Prüfstands- und/oder Testaufbauten in der Entwicklung zu reduzieren und den Einsatz von Simulationen und Modellen in der Produktentwicklung zu fördern. Dies kann vorteilhaft sein, Entwicklungszeiten zu reduzieren. In weiteren Beispielen kann das Verfahren dazu dienen, relevante Metriken in die Validierungsmetrik einfließen zu lassen und beispielsweise korrelierte Metriken zu entfernen. Ein weiterer Vorteil kann darin gesehen werden, dass Konfidenzintervalle bestimmt werden können, die zur Überprüfung der Validierungsmetrik verwendet werden können und beispielsweise Aufschluss über eine eventuell notwendige Erneuerung der Validierungsmetrik geben können.

Weitere Vorteile können darin bestehen, dass Modelle, die mittels der Validierungsmetrik validiert werden, dazu dienen können, Fahrzeugfunktionen, Roboterfunktionen, Gebäudeautomatisierungsfunktionen, Elektrowerkzeugautomatisierungsfunktionen, und/oder Haushaltsgeräteautomatisierungsfunktionen zu entwickeln, testen, validieren und/oder zu verifizieren. In Beispielen können die Daten dazu dienen, Maschinelles-Lernen-Modelle zu trainieren, zu testen, und/oder zu validieren. Ein weiterer Vorteil kann darin bestehen, dass die Maschinelles-Lernen-Modelle verwendet werden können, eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln.

Einige Begriffe werden in der vorliegenden Offenbarung in folgender Weise verwendet:

Ein "Fahrzeug" kann jegliche Vorrichtung, die Passagiere und/oder Fracht transportiert, sein. Ein Fahrzeug kann ein Kraftfahrzeug (zum Beispiel ein PKW oder ein LKW) sein, aber auch ein Schienenfahrzeug. Ein Fahrzeug kann auch ein motorisiertes Zwei- oder Dreirad sein. Allerdings können auch schwimmende und

fliegende Vorrichtungen Fahrzeuge sein. Fahrzeuge können zumindest teilautonom operierend oder assistiert sein.

## Kurzbeschreibung der Figuren

Fig. 1  illustriert schematisch ein beispielhaftes Verfahren zum Bestimmen einer Validierungsmetrik für die Bestimmung einer Modellgüte.

Fig. 2  illustriert schematisch eine erste Datenreihe und eine zweite Datenreihe.

Fig. 3  illustriert schematisch eine Beurteilung von ersten Datenreihen einer Mehrzahl von Simulationen 1 bis 4 in Form eines Boxplots.

Fig. 4  illustriert schematisch eine beispielhafte Architektur zur Ausführung des Verfahrens zum Bestimmen einer Validierungsmetrik für die Bestimmung einer Modellgüte.

## Detaillierte Beschreibung

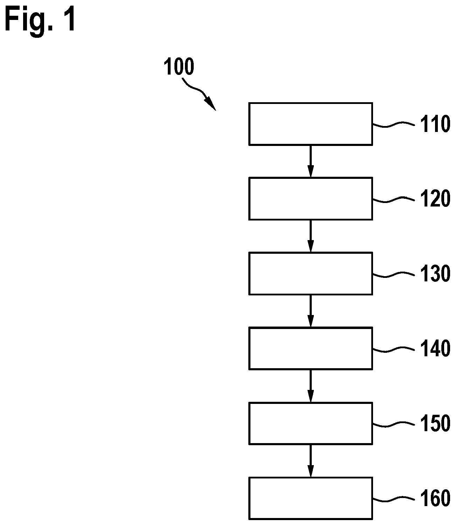

**Fig. 1** ist ein Fluss-Diagramm, das mögliche Schritte des computerimplementierten Verfahrens 100 zum Bestimmen einer Validierungsmetrik für die Bestimmung einer Modellgüte zeigen.

Das computerimplementierte Verfahren 100 zum Bestimmen einer Validierungsmetrik für die Bestimmung einer Modellgüte umfasst Empfangen 110 einer ersten Datenreihe 11a, die Ergebnisse einer Simulation umfasst, Empfangen 120 einer zweiten Datenreihe 11b, die Ergebnisse einer Messung umfasst, und Empfangen 130 einer Augenscheinvalidierung der ersten Datenreihe auf Basis eines Vergleichs zur zweiten Datenreihe 11b, um eine Beurteilung der ersten Datenreihe 11a zu erhalten. Das Verfahren umfasst Anwenden 140 einer Mehrzahl vorgegebener Metriken auf die erste Datenreihe 11a und die zweite Datenreihe 11b und Auswählen 150 einer oder mehrerer Metriken aus der Mehrzahl von Metriken auf der Grundlage einer Vorgabebedingung. Das Verfahren 100 umfasst Bestimmen 160 einer Validierungsmetrik auf Basis einer Optimierung von Parametern unter Verwendung der ausgewählten einen oder mehreren Metriken und der Beurteilung der ersten Datenreihe. In Beispielen kann das Anwenden 140 einer Mehrzahl vorgegebener Metriken auf die erste Datenreihe 11a und die zweite Datenreihe 11b das Anwenden einer Mehrzahl vorgegebener Metriken auf eine Kombination aus der ersten Datenreihe 11a und der zweiten Datenreihe 11b umfassen.

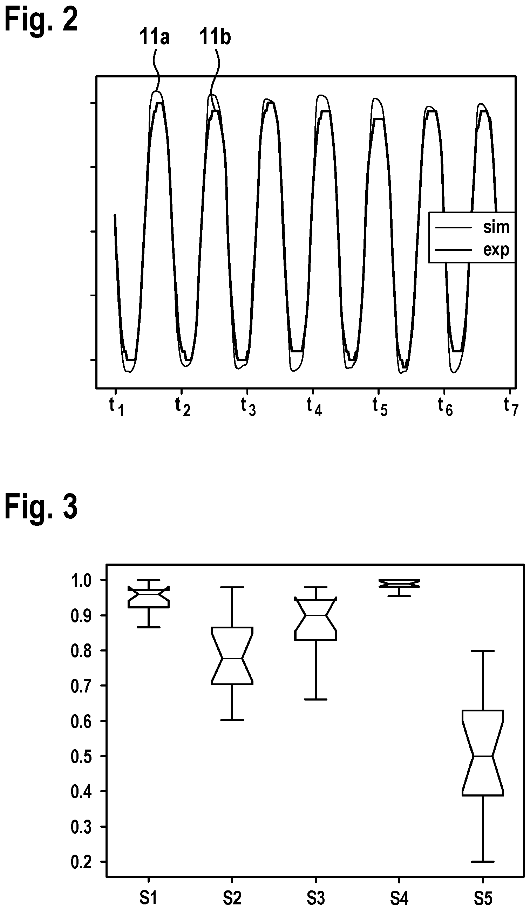

In **Fig. 2** ist beispielhaft eine erste Datenreihe 11a einer Simulation in Form einer Zeitreihe und eine zweite Datenreihe 11b einer Messung in Form einer Zeitreihe dargestellt. Zum Beispiel kann die Messung Positionswerte einer Zahnstangenlenkung umfassen. Beispielsweise kann der Prototyp einer Zahnstangenlenkung auf einem Prüfstand montiert werden. In Beispielen kann ein Elektrozylinder eine sinusförmige (oder sprunghafte) Kraft auf das Zahnstangenende ausüben. Auf dem Prüfstand kann die Position der geregelten Zahnstange gemessen werden. In Beispielen kann die Position der geregelten Zahnstange der zweiten Datenreihe 11b entsprechen. In Beispielen kann der gleiche Lastfall in einer Simulation angewandt werden. Das Simulationsmodell kann ein physikalisches Lenkungsmodell und einen dazu gehörigen Positionsregler umfassen. Die Ausgabe der Simulation kann die Zahnstangenposition je nach simuliertem Lastfall umfassen. Die Ausgabe der Simulation kann der ersten Datenreihe 11a entsprechen.

Eine Metrik kann einen mathematischen Operator umfassen, der zwei Datenreihen auf einen Skalar abbildet, der mitunter ebenfalls als Metrik bezeichnet werden kann. Beispielsweise kann die Mehrzahl vorgegebener Metriken einen mittleren quadratischen Fehler umfassen, der mathematisch durch folgende Gleichung ausgedrückt werden kann:

$$MSE = \frac{1}{n}\sum_{i=1}^{n}(Y_i - \hat{Y}_i)$$

In Beispielen kann die erste Datenreihe 11a und/oder die zweite Datenreihe 11b eine abgetastete Zeitreihe umfassen. Vorliegend kann die erste Datenreihe 11a $Y_i$ entsprechen und die zweite Datenreihe 11b $\hat{Y}_i$ entsprechen. Das Anwenden 140 der Mehrzahl vorgegebener Metriken kann in Beispielen umfassen, eine Bezugsgröße zwischen der ersten Datenreihe 11a und der zweiten Datenreihe 11b zu bestimmen. In Beispielen kann die Mehrzahl vorgegebener Metriken Metriken umfassen, die zwischen Phasen-, Magnituden- und Steigungsfehlern unterscheiden. Beispielsweise können diese Metriken aus einzelnen Fehleranteilen, zum Beispiel eine Differenz zwischen zwei Zeitpunkten der ersten Datenreihe 11a und der zweiten Datenreihe 11b, dazu dienen, über eine gewichtete Summe eine Validierungsmetrik zu bestimmen. In Beispielen können die Mehrzahl vorgegebener Metriken dazu dienen, eine Quantifizierung dafür bereitzustellen, wie gut eine Simulation eine Messung nachbildet.

In Beispielen kann die Validierungsmetrik eine Summe einer oder mehrerer Summanden umfassen. In Beispielen kann der eine oder die mehreren Summanden gewichtet sein. Zum Beispiel können die optimierten Parameter die Gewichte $c_0$, $c_1$, $c_2$, ... $c_i$ der Summanden umfassen. Die Summanden können die einen oder mehreren Metriken $M_1, M_2, ... M_i$ umfassen. Beispielsweise kann die Validierungsmetrik mathematisch folgendermaßen ausgedrückt werden:

$$R = c_0 + c_1 M_1 + c_2 M_2 + c_3 M_3 + \cdots + c_i M_i$$

In Beispielen kann die Validierungsmetrik die Randbedingung, dass die Summe der Parameter den Wert 1 ergeben, umfassen: $c_0 + c_1 + c_2 + \cdots + c_i = 1$.

In Beispielen kann das Bestimmen 160 der Validierungsmetrik das Berechnen einer Regressionskurve umfassen. In Beispielen kann die Beurteilung der ersten Datenreihe 11a die abhängigen Variablen der Regressionskurve umfassen und die unabhängigen Variablen der Regressionskurve die Parameter umfassen. Zum Beispiel kann die berechnete Regressionskurve die zu bestimmende Validierungsmetrik umfassen. Zum Beispiel kann die abhängige Variable R die Beurteilung der ersten Datenreihe 11a umfassen. Zum Beispiel kann die unabhängige Variable die Parameter $c_0$, $c_1$, $c_2$, ... $c_i$ umfassen.

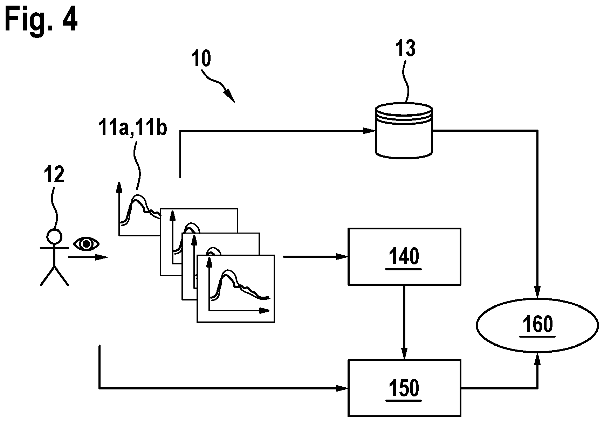

**Fig. 4** illustriert schematisch eine beispielhafte Architektur 10 zur Ausführung des Verfahrens zur Generierung einer Validierungsmetrik für die Bestimmung einer Modellgüte.

In Beispielen kann die Augenscheinvalidierung auf einem Bewertungsintervall basieren. Die Beurteilung der ersten Datenreihe 11a kann einen Vektor mit einer Mehrzahl von Einträgen umfassen. In Beispielen kann jeder Eintrag eine Bewertung eines Experten 12 umfassen. Zum Beispiel kann jeder Eintrag des Vektors einen Wert aus dem Bewertungsintervall umfassen. In Beispielen können sich mehrere Experten 12 die erste Datenreihe 11a einer Simulation und die zweite Datenreihe 11b einer Messung anschauen, wie in Fig. 4 veranschaulicht. Das Ergebnis kann ein Vektor pro Simulation sein, der eine Mehrzahl von Einträgen umfasst. Das Ergebnis der Augenscheinvalidierung ergibt eine Beurteilung der entsprechenden Simulationsergebnisse. In Beispielen kann die erste Datenreihe 11a Ergebnisse eine Mehrzahl von Simulationen umfassen. In Beispielen kann die zweite Datenreihe 11b Ergebnisse einer Mehrzahl von Messungen umfassen. In Beispielen kann die Beurteilung der ersten Datenreihe 11a einen Vektor für jede Simulation umfassen. Die Augenscheinvalidierung kann für eine Mehrzahl von Simulationen und eine Mehrzahl von Messungen durchgeführt werden, sodass die Beurteilung der ersten Datenreihe 11a eine Matrix umfasst. Die Spalten der Matrix können in Beispielen jeweils den Vektor mit den Bewertungseinträgen der mehreren Experten pro Simulation umfassen. In Beispielen kann eine Mehrzahl von Simulationen und zugehörigen Messungen in einen Trainingsdatensatz und in einen Testdatensatz aufgeteilt werden. In Beispielen kann der Trainingsdatensatz erste Datenreihen 11a einer ersten Anzahl von Simulationen und zweite Datenreihen 11b einer ersten Anzahl von Messungen umfassen, die zur Bestimmung der Validierungsmetrik herangezogen werden. In Beispielen kann der Testdatensatz erste Datenreihen 11a einer zweiten Anzahl von Simulationen und zweite Datenreihen 11b einer zweiten Anzahl von Messungen umfassen, die zum Testen der Validierungsmetrik herangezogen werden. In Beispielen kann das Verhältnis des Umfangs des Trainingsdatensatzes zu dem Umfang des Testdatensatz 80:20 sein. In Beispielen kann die Zuteilung des Trainingsdatensatzes und des Testdatensatzes auf (Pseudo-)Zufall oder einem Mischen der jeweiligen ersten Datenreihen 11a und zweiten Datenreihen 11b basieren. Zum Beispiel kann dadurch das Risiko reduziert werden, dass zeitlich langsame Veränderungen in den sukzessiv gespeicherten Datenreihen versteckt sind. Zum Beispiel können sich bei zehn Messungen, Reibparameter über die ersten vier Messungen einstellen und dann über die verbleibenden sechs Messungen konstant sein.

**Fig. 3** illustriert schematisch die Beurteilung von ersten Datenreihen 11a einer Mehrzahl von Simulationen S1 bis S4 in Form eines Boxplots.

In Beispielen kann das Bewertungsintervall Werte zwischen 0 und 10 umfassen. In Beispielen kann das Bewertungsintervall Werte zwischen 0 und 1 oder zwischen 0 und 100 umfassen. In Beispielen kann dabei 0 für die schlechteste Modellgüte stehen. Wie in **Fig. 4** dargestellt, sieht man beispielsweise bei der vierten Simulation $S_4$, dass die mehreren Experten die erste Datenreihe 11a, die Ergebnisse dieser dritten Simulation umfasst, in ihrer Beurteilung der Simulation näher beieinander liegen als beispielsweise bei der fünften Simulation $S_5$ und die Simulation als besser (nahe 1.0) bewertet haben. In Beispielen kann die Beurteilung der ersten Datenreihe 11a in einer Datenbank 13 abgespeichert sein.

In Beispiel kann das Berechnen der Regressionskurve das Anpassen der Parameter umfassen, sodass die Regressionskurve, das heißt, die zu bestimmende Validierungsmetrik, bis zu einem vorgegebenen Grad die Beurteilung der ersten Datenreihe 11a repräsentiert. Hierfür werden Werte für die Parameter $c_0$, $c_1$, $c_2$, ... $c_i$ bestimmt, sodass die Regressionskurve die Beurteilung der ersten Datenreihe 11a bis zu einem vorgegebenen Grad repräsentiert. In Beispielen kann die Regressionskurve durch den Median der jeweiligen Beurteilung einer Simulation verlaufen. In Beispielen kann die Bestimmung der Parameter eine Optimierung der Parameter umfassen. Die Optimierung der Parameter kann dabei umfassen, dass die Parameter bis zu einem bestimmten Grad optimiert werden und nicht zwingend zum (absoluten) Optimum optimiert werden.

In Beispielen kann das Auswählen 150 der einen oder mehreren Metriken aus der Mehrzahl von Metriken und das Bestimmen der Validierungsmetrik mittels einer LASSO-Regression durchgeführt werden. In Beispielen können einzelne Metriken der Mehrzahl von Metriken korreliert sein. In Beispielen kann das Auswählen 150 der einen oder mehreren Metriken das Weglassen korrelierter Metriken der Mehrzahl von Metriken umfassen. In Beispielen kann die Vorgabebedingung auf deren Grundlage das Auswählen 150 durchgeführt wird, einen Korrelationskoeffizienten umfassen. Dies kann vorteilhaft sein, um die Anzahl der Metriken für die Validierungsmetrik zu reduzieren, ohne die Genauigkeit der Validierungsmetrik zu verschlechtern. In Beispielen kann das Auswählen 150 mittels einer "Least Absolute Shrinkage and Selection Operator"-(LASSO)-Regression durchgeführt werden. Dabei kann die absolute Summe der unabhängigen Variablen, d.h. der zu bestimmenden Parameter, begrenzt sein. In Beispielen kann dies dazu führen, dass einige Parameter null werden, was gleichbedeutend damit sein kann, dass die Metriken, die mit den entsprechenden Parametern gewichtet werden, aus der Validierungsmetrik entfernt werden. In Beispielen kann das Auswählen 150 der einen oder mehreren Metriken auf Basis einer "minimum-redundancy-maximum-relevant"-(mRMR)-Selektion durchgeführt werden.

In Beispielen kann das Verfahren 100 das Aufteilen der ersten Datenreihe 11a und/oder der zweiten Datenreihe 11b in einen oder mehrere Abschnitte umfassen. In Beispielen kann die Mehrzahl vorgegebener Metriken die Länge eines Abschnitts der jeweiligen Datenreihe 11a, 11b umfassen. In Beispielen kann der eine Abschnitt oder die mehreren Abschnitte zeitlichen Abschnitten entsprechen. In Beispielen kann die Länge eines Abschnitts mittels eines ersten Zeitpunkts und eines zweiten Zeitpunkts definiert sein. Dies kann dazu dienen, eine Validierungsmetrik bereitzustellen, die in einem bestimmten Zeitabschnitt Gültigkeit hat. Dies kann vorteilhaft sein, Zeitabschnitten mit unterschiedlichen Charakteristiken jeweils gültige Validierungsmetriken bereitzustellen.

In Beispielen kann die Mehrzahl vorgegebener Metriken mindestens eines von mittlerer absoluter Fehler, mittlere quadratische Abweichung, Median der absoluten Abweichung, Kreuzkorrelation, normalisierte mittlere quadratische Abweichung, und/oder Sprague Geers umfassen.

In Beispielen kann bei Berechnung der Regressionskurve eine Normalverteilung von Störgrößen angenommen werden und Konfidenzintervalle über Erwartungswert und Varianz berechnet werden. In Beispielen können die Störgrößen externe Kräfte auf eine Zahnstangenlenkung umfassen. In Beispielen können nichtparametrische Methoden zur Bestimmung der Konfidenzintervalle benutzt werden, wie zum Beispiel "Bootstrapping".

In Beispielen kann das Verfahren 100 das erneute Berechnen der Regressionskurve umfassen, wenn beispielsweise ein Konfidenzintervall der Validierungsmetrik zu groß wird.

In Beispielen kann das Verfahren Verwenden der Validierungsmetrik zur Validierung einer neuen Simulation umfassen. In Beispielen kann die neue Simulation die Simulation einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion umfassen.

In Beispielen kann die Simulation und/oder eine neue Simulation eine Simulation einer Fahrzeugfunktion umfassen (insbesondere zur Steuerung einer Fahrfunktion). Zum Beispiel kann die Fahrzeugfunktion eine Funktion zum autonomen und/oder assistierten Fahren umfassen. In Beispielen kann die Fahrzeugfunktion eine Regelung und/oder Steuerung einer Zahnstangenlenkung umfassen. In der Simulation kann beispielsweise ein bestimmter Lastfall (externe Kraft) auf die Zahnstangenlenkung angewandt werden. In Beispielen kann die Simulationen einen Positionsregler der Zahnstangenlenkung umfassen. Die Ausgabe der Simulation kann die Zahnstangenposition je nach Lastfall umfassen. In Beispielen kann mittels der Validierungsmetrik eine Modellgüte für die Simulation der Zahnstangenlenkung bestimmt werden.

In anderen Beispielen kann die Simulation und/oder eine neue Simulation eine Simulation einer Roboterfunktion umfassen (insbesondere zur Steuerung einer Bewegungsfunktion eines Roboters). Zum Beispiel kann die Roboterfunktion eine Funktion zur Querführung und/oder Längsführung des Roboters sein.

In einem Beispiel kann die Simulation und/oder eine neue Simulation eine Simulation einer Gebäudefunktionen umfassen (insbesondere zur Steuerung von Gebäudeautomatisierungsfunktionen). Zum Beispiel kann die Gebäudefunktion eine Funktion zum Regeln von Raumtemperatur, Beleuchtung und/oder Sicherheitseinrichtung sein.

In einer Ausführungsform kann das computerimplementierte Verfahren 100 das Anwenden der Validierungsmetrik auf ein Maschinelles-Lernen-Modell zur Bestimmung der Modellgüte umfassen. In Beispielen kann das Verfahren Verwenden des Maschinelles-Lernen-Modells, um eine Fahrzeugfunktion, eine Roboterfunktion, eine Gebäudeautomatisierungsfunktion, eine Elektrowerkzeugautomatisierungsfunktion, und/oder eine Haushaltsgeräteautomatisierungsfunktion zu steuern und/oder zu regeln, umfassen. In Beispielen kann das Verfahren 100 das Einspielen des Maschinelles-Lernen-Modells auf ein Computersystem eines Fahrzeugs, eines Roboters, eines Gebäudes, eines Elektrowerkzeugs, eines Haushaltsgeräts, einer Werkzeugmaschine, eines persönlichen Assistenten, eines Zutrittskontrollsystems, und/oder eines Medizingeräts umfassen.

Offenbart wird weiterhin ein Computersystem, das dafür ausgelegt ist, das computerimplementierte Verfahren 100 zum Bestimmen einer Validierungsmetrik für die Bestimmung einer Modellgüte auszuführen. Das Computersystem kann mindestens einen Prozessor und/oder mindestens einen Arbeitsspeicher umfassen. Das Computersystem kann weiterhin einen (nicht-volatilen) Speicher umfassen. In Beispielen können alle Schritte des Verfahrens 100 von dem Computersystem ausgeführt werden. In manchen Beispielen können einzelne Schritte des Verfahrens 100 durch das Computersystem ausgeführt werden. Optional können Ergebnisse einzelner Verfahrensschritte, die nicht durch das Computersystem ausgeführt werden, von dem Computersystem empfangen werden. In Beispielen kann das Computersystem eine Benutzer-Schnittstelle umfassen, um eine Augenscheinvalidierung der ersten Datenreihe 11a auf Basis eines Vergleichs zur zweiten Datenreihe 11b zu empfangen. In Beispielen kann das Computersystem eine Cloud umfassen, in denen zumindest Teile des computerimplementierten Verfahrens 100 ausgeführt werden. In Beispielen kann die Validierungsmetrik mittels einer Web-App Benutzern bereitgestellt werden. In Beispielen kann das Computersystem ausgelegt sein, Simulationsergebnisse von Benutzer mittels einer CI/CD-Pipeline zu empfangen und eine Modellgüte des Simulationsmodells anzuzeigen.

Offenbart wird weiterhin ein Computerprogramm, das dafür ausgelegt ist, das computerimplementierte Verfahren 100 zum Bestimmen einer Validierungsmetrik für die Bestimmung einer Modellgüte auszuführen. Das Computerprogramm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computerlesbares Medium oder Signal, das das Computerprogramm oder mindestens einen Teil davon speichert und/oder enthält. Das Medium kann z.B. eines von RAM, ROM, EPROM, HDD, SDD, ... umfassen, auf/in dem das Signal gespeichert wird.

## Patentansprüche

1. Computerimplementiertes Verfahren (100) zum Bestimmen einer Validierungsmetrik für die Bestimmung einer Modellgüte, wobei das Verfahren umfasst:

   - Empfangen (110) einer ersten Datenreihe (11a), die Ergebnisse einer Simulation umfasst,
   - Empfangen (120) einer zweiten Datenreihe (11b), die Ergebnisse einer Messung umfasst,
   - Empfangen (130) einer Augenscheinvalidierung der ersten Datenreihe auf Basis eines Vergleichs zur zweiten Datenreihe (11b), um eine Beurteilung der ersten Datenreihe (11a) zu erhalten,
   - Anwenden (140) einer Mehrzahl vorgegebener Metriken auf die erste Datenreihe (11a) und die zweite Datenreihe (11b) und Auswählen (150) einer oder mehrerer Metriken aus der Mehrzahl von Metriken auf der Grundlage einer Vorgabebedingung, und
   - Bestimmen (160) einer Validierungsmetrik auf Basis einer Bestimmung von Parametern unter Verwendung der ausgewählten einen oder mehreren Metriken und der Beurteilung der ersten Datenreihe.

2. Computerimplementiertes Verfahren (100) gemäß Anspruch 1, wobei die Validierungsmetrik eine Summe einer oder mehrerer Summanden umfasst, wobei der eine oder die mehreren Summanden gewichtet sind, wobei die optimierten Parameter die Gewichte der Summanden umfassen und die Summanden die einen oder mehreren Metriken umfassen.

3. Computerimplementiertes Verfahren (100) gemäß Anspruch 1 oder 2, wobei das Bestimmen (160) der Validierungsmetrik das Berechnen einer Regressionskurve umfasst, und wobei die Beurteilung der ersten Datenreihe (11a) die abhängigen Variablen der Regressionskurve umfasst und die unabhängigen Variablen der Regressionskurve die Parameter umfassen.

4. Computerimplementiertes Verfahren (100) gemäß Anspruch 1, 2, oder 3, wobei die Augenscheinvalidierung auf einem Bewertungsintervall basiert, und die Beurteilung der ersten Datenreihe (11a) einen Vektor mit einer Mehrzahl von Einträgen umfasst, wobei jeder Eintrag eine Bewertung eines Experten (12) umfasst und wobei jeder Eintrag des Vektors einen Wert aus dem Bewertungsintervall umfasst.

5. Computerimplementiertes Verfahren (100) gemäß einem der vorhergehenden Ansprüche, wobei das Auswählen (150) der einen oder mehreren Metriken aus der Mehrzahl von Metriken und das Bestimmen der Validierungsmetrik mittels einer LASSO-Regression durchgeführt werden.

6. Computerimplementiertes Verfahren (100) gemäß einem der vorhergehenden Ansprüche, wobei das Verfahren umfasst

    - Aufteilen der ersten Datenreihe (11a) und/oder der zweiten Datenreihe (11b) in einen oder mehrere Abschnitte, und wobei die Mehrzahl vorgegebener Metriken die Länge eines Abschnitts der jeweiligen Datenreihe (11a, 11b) umfasst.

7. Computerimplementiertes Verfahren (100) gemäß einem der vorhergehenden Ansprüche, wobei die Mehrzahl vorgegebener Metriken mindestes eines von mittlerer absoluter Fehler, mittlere quadratische Abweichung, Median der absoluten Abweichung, Kreuzkorrelation, normalisierte mittlere quadratische Abweichung, und/oder Sprague Geers umfasst.

8. Computerimplementiertes Verfahren (100) gemäß einem der vorhergehenden Ansprüche, wobei das Verfahren umfasst

    - Verwenden der Validierungsmetrik zur Validierung einer neuen Simulation, wobei die neue Simulation die Simulation einer Fahrzeugfunktion, einer Roboterfunktion, einer Gebäudeautomatisierungsfunktion, einer Elektrowerkzeugautomatisierungsfunktion, und/oder einer Haushaltsgeräteautomatisierungsfunktion umfasst.

9. Computersystem, dafür ausgelegt, das computerimplementierte Verfahren (100) zum Bestimmen einer Validierungsmetrik für die Bestimmung einer Modellgüte gemäß einem der vorhergehenden Ansprüche 1 bis 8 auszuführen.

10. Computerprogramm, umfassend Befehle, die bei der Ausführung des Computerprogramms durch ein Computersystem dieses veranlassen, das computerimplementierte Verfahren (100) zum Bestimmen einer Validierungsmetrik für die Bestimmung einer Modellgüte gemäß einem der vorhergehenden Ansprüche 1 bis 8 auszuführen.

11. Computerlesbares Medium oder Signal, das das Computerprogramm gemäß Anspruch 10 speichert und/oder enthält.

# Fig. 1

# Fig. 2

# Fig. 3

# Fig. 4

Europäisches
Patentamt

European
Patent Office

Office européen
des brevets

# EUROPÄISCHER RECHERCHENBERICHT

Nummer der Anmeldung

EP 24 16 3408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 201183 A1 (BOSCH GMBH ROBERT [DE]) 5. August 2021 (2021-08-05) <br> * das ganze Dokument * <br> * Zusammenfassung * <br> * Absatz [0002] - Absatz [0003] * <br> * Absatz [0005] - Absatz [0008] * <br> * Formeln 1 und 2 * <br> ----- | 1-11 | INV. <br> G06F30/20 <br> G06F30/27 <br><br> ADD. <br> G06F111/10 |
| A | Anonymous: "Cross-correlation - Wikipedia", <br> , <br> 4. Januar 2024 (2024-01-04), Seiten 1-9, XP093197832, <br> Gefunden im Internet: <br> URL:https://en.wikipedia.org/w/index.php?title=Cross-correlation&oldid=1193503271 <br> * das ganze Dokument * <br> * Absatz 1 * <br> ----- | 1-11 | |
| A | DONA RICCARDO ET AL: "Virtual Testing in Automated Driving Systems Certification. A Longitudinal Dynamics Validation Example", IEEE ACCESS, <br> Bd. 10, 29. April 2022 (2022-04-29), Seiten 47661-47672, XP093197849, <br> USA <br> DOI: 10.1109/ACCESS.2022.3171180 <br> * das ganze Dokument * <br> * Zusammenfassung * <br> * Gleichungen (1) bis (5) * <br> ----- | 1-11 | RECHERCHIERTE SACHGEBIETE (IPC) <br><br> G06F |

Der vorliegende Recherchenbericht wurde für alle Patentansprüche erstellt

| Recherchenort | Abschlußdatum der Recherche | Prüfer |
|---|---|---|
| München | 23. August 2024 | Rungger, Matthias |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 3408

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2024

| Im Recherchenbericht angeführtes Patentdokument | Datum der Veröffentlichung | Mitglied(er) der Patentfamilie | Datum der Veröffentlichung |
|---|---|---|---|
| DE 102020201183 A1 | 05-08-2021 | KEINE | |

Für nähere Einzelheiten zu diesem Anhang : siehe Amtsblatt des Europäischen Patentamts, Nr.12/82

EPO FORM P0461